# EUROPEAN PATENT APPLICATION

(11) **EP 1 447 192 A1**
(43) Date of publication of application: **18.08.2004**
(21) Application number: 04075425.1
(22) Date of filing: 10.02.2004
(51) Int. Cl.: B28B 17/02, B28C 5/46, B28C 5/42

(54) **Method and device for pouring concrete**

(30) Priority: 13.02.2003 NL 1022669; 26.06.2003 NL 1023757
(71) Applicant: Ballast Nedam Infra B.V., 3439 LM Nieuwegein (NL)
(72) Inventor: Schouwenaar, Johannes, 1353 KC Almere (NL); Van der Wolf, Mark Robert, 1187 TB Amstelveen (NL)
(74) Representative: Hylarides, Paul Jacques

(57) **Abstract**

The present invention relates to a method for pouring concrete onto a ground in a pouring space intended for this purpose, comprising of:
- providing plastic concrete mortar;
- supplying heat to the concrete mortar or extracting heat from the concrete mortar so as to adjust the temperature of the provided concrete mortar to a desired predetermined temperature value;
- pouring the concrete mortar brought to said temperature value into the pouring space intended for the purpose.

## Description

The present invention relates to a method and to a device for pouring concrete onto a ground in a pouring space intended for this purpose.

In the building of concrete constructions, such as concrete walls and floors of a house, the walls and the roof of a tunnel, etc., concrete mortar is manufactured and poured into a formwork, whereafter the concrete mortar remains in the formwork for some considerable time for the purpose of curing. During the curing process of concrete mortar heat is developed, which has the result that the temperature of the freshly poured concrete can increase considerably. In most cases the concrete mortar is applied to a ground which is relatively cold. As a result of the heating of the freshly poured concrete and the relatively low temperature of the ground, relatively great stresses occur in the poured concrete. Such stresses may adversely affect the quality of the concrete. The stresses can for instance impair the strength of the concrete or cause cracks, whereby the concrete is no longer watertight. This latter effect cannot be tolerated, particularly in tunnel construction.

In order to reduce the stresses in the freshly poured concrete mortar, the concrete (mortar) is usually cooled. Different techniques are known for achieving this. A first technique, also referred to as internal cooling, involves providing the pouring space between the formwork with a number of cooling pipes. More specifically, cooling pipes are interlaced with the reinforcement. Once the concrete mortar has been arranged in the formwork, relatively cold liquid is guided through the cooling pipes, as a result of which the concrete mortar around the cooling pipes cools, or at least heats less rapidly. The tensile stresses in the concrete are hereby reduced and concrete of a good quality is provided.

A drawback hereof is that during interlacing (with the concrete reinforcement) additional operations are required to arrange the cooling pipes, which costs time and material. There is moreover the danger that the cooling pipes will begin to leak during the operation, which can considerably reduce the quality of the concrete.

A further drawback of using cooling conduits is that the cooling pipe remains in place after the concrete has cured, the cooling liquid must be removed from the pipes and a suitable injection mortar has to be injected into the pipes. Furthermore, the pipes have to be blocked at their mouth. Such a cooling system is therefore complicated, requires many additional operations and has a cost-increasing effect on the total building costs of the construction.

A second technique involves the arranging of cooling pipes on the outside of the formwork. This enables cooling of the formwork itself, and thereby also the concrete mortar adjoining the formwork. A drawback of this technique is that only the outer surface of the wall can be cooled, while the core of the wall cannot be cooled. This means that the stresses inside the wall do not decrease sufficiently.

Another technique for reducing the stresses, and then in particular tensile stresses, in the freshly poured concrete involves adding relatively cold aggregate material during the mixing process or adding relatively cold mixing water during the mixing process. Instead of adding water to obtain the concrete mortar, ice chippings for instance may be added. The cold aggregate material and/or the cold mixing water and/or the ice chippings ensure that the temperature of the concrete is lower after mixing. A drawback of this technique is that the aggregate material and/or mixing water may have an adverse effect on specific physical properties of the concrete mortar and that the temperature of the concrete mortar cannot be adjusted with any great accuracy.

It is further known to cool the concrete mortar using liquid nitrogen. This method has the drawback however that it is labourious and requires additional operations. This makes the method expensive. Furthermore, the temperature of the final concrete mortar can be brought to and held at a desired temperature with less precision.

DE 25 37 173 A1 describes a method wherein the different constituents, i.e. aggregate material, cement or mixing water, are cooled with liquid nitrogen. A drawback of the known method of cooling the constituents before they are mixed is that the temperature of the final concrete mortar consisting of a mixture of cement, mixing water and optional aggregate can be brought to and held at a desired value with insufficient accuracy. When the desired value of the concrete mortar is higher than the temperature of the constituents, the temperature of the concrete mortar cannot be increased to the desired temperature value.

Another drawback of the known methods of building concrete constructions is that at a low ambient temperature, for instance at an outside air temperature around freezing point, the concrete mortar is too cold and pouring cannot take place and must therefore be postponed. This may result in (costly) delays in the building process.

Even at higher ambient temperatures problems may arise. When relatively short form removal times are desired, for instance during work on railway track or when arranging underwater concrete in a tunnel casing in respect of pumping out the tunnel casing, the known building methods often have shortcomings. The concrete mortar which is used is then relatively cold, which implies a (too) long form removal time.

Diverse techniques are known for heating the concrete. It is possible to add relatively warm aggregate and/or relatively warm mixing water during the mixing process. Substances can also be added which enter into a chemical reaction with determined constituents of the concrete mortar. The concrete mortar is then heated by the reaction heat released during this reaction. The drawback of these known techniques is that the temperature of the concrete mortar during pouring can only be adjusted inaccurately. Possible chemical reactions may moreover have an adverse effect on determined physical properties of the concrete.

Another known technique for heating concrete is to heat already poured concrete using heaters, such as radiant heaters or hot-air heaters, as is for instance usual in tunnel formwork in house-building. This technique is time-consuming and labour-intensive. Furthermore, only the outer surface of the concrete is heated, while the core remains virtually at the starting temperature.

It is the object of the present invention to obviate the drawbacks associated with the prior art and to provide an improved method and device with which the temperature of the concrete mortar can be adjusted in accurate manner.

According to a first aspect of the present invention, there is provided for this purpose a method for pouring concrete onto a ground in a pouring space intended for this purpose, comprising of:
- providing plastic mixed concrete mortar;
- supplying heat to the mixed concrete mortar or extracting heat from the concrete mortar so as to adjust the temperature of the provided concrete mortar to a desired predetermined temperature value;
- pouring the concrete mortar at said temperature value. By adding heat to or extracting heat from the concrete mortar in the situation where the concrete mortar is already mixed, the temperature of the concrete mortar can be influenced in accurate manner. The temperature of the concrete mortar is herein adjusted such that the concrete mortar, once it has arrived in the pouring space (formed by the formwork), has a suitable preset temperature.

The method preferably comprises of guiding the provided concrete mortar in a container and adjusting by either heating or cooling the container with temperature adjusting means disposed in or close to the container for the purpose of heating respectively cooling the concrete mortar in the container. The heating/cooling means preferably comprise a number of conduits provided in or on the wall of the container along which a fluid (liquid or gas) at a suitable (relatively high or relatively low) temperature can be guided to heat respectively cool the concrete mortar in the container. The method therefore preferably comprises of guiding the fluid along the conduits to cool or heat the concrete mortar.

The method preferably comprises of determining the temperature of the concrete mortar and heating or cooling the concrete mortar on the basis of the determined temperature. With such a feedback the concrete mortar can be held at the correct temperature, even in variable conditions such as when the ambient temperature changes.

The method preferably comprises of repeating the steps of determining the temperature and heating and/or cooling the concrete mortar until the concrete mortar has reached the desired, predetermined temperature value. Such an iterative process enables a precise adjustment of the temperature of the concrete mortar.

The method preferably further comprises of:
- supplying plastic concrete mortar;
- carrying the supplied concrete mortar through a concrete mortar container, in particular a concrete mortar supply tube;
- heating respectively cooling the concrete mortar in the container with the temperature adjusting means;
- discharging the thus treated concrete mortar from the container. In this embodiment the concrete mortar is heated or cooled during carrying (pumping, pouring, etc.) of the mortar through the supply tube with which the concrete is brought to the place of use. The cooling/heating of concrete mortar herein takes place in the transport pipe of a concrete pump which may or may not be mobile. The cooling or heating of the concrete mortar takes place by providing the pipe of the concrete pump with a cooling/heating system connected to a cooling/heating module. The cooling/heating of concrete mortar in a transport pipe can also be brought about with a separate cooling/heating installation. It is possible here to envisage a fixed transport pipe in the case of high-rise building or a (floating) transport pipe when pouring underwater concrete. The cooling or heating of the concrete mortar takes place by providing the transport pipe with a cooling and/or heating system which is connected to a cooling and/or heating module.

In another preferred embodiment, the method comprises of mixing concrete mortar in a mixing device; adjusting the temperature of at least a part of the mixing device with the temperature adjusting means until the concrete mortar has reached the desired, preset temperature; and discharging the thus treated concrete mortar from the mixing device. An example hereof is the cooling/heating of concrete mortar in a mixing vessel mounted on a vehicle (truck) (also referred to as truck mixer).

The cooling or heating of the concrete mortar then takes place by providing the blades in the drum and/or the wall of the drum with a cooling/heating system which is connected to a cooling/heating module. The method therefore preferably comprises of:
- mixing concrete mortar in a mixing device;
- guiding the concrete mortar out of the mixing device to a container;
- heating respectively cooling at least a part of the container with the temperature adjusting means until the concrete mortar has reached the desired, preset temperature;
- discharging the thus treated concrete mortar from the container.

In accordance with a particularly advantageous embodiment, the method further comprises of changing the temperature of the concrete mortar during pouring of the concrete mortar into the space intended for the purpose. Changing of the temperature can be carried out batchwise, i.e. for each subsequent batch of mortar for pouring the temperature of the mortar can be brought to a suitable temperature for the batch in question. It is however also possible to adjust the temperature continuously. Different temperatures can be applied for adjacent parts of a building by adjusting the temperature, wherein each building part is constructed from concrete mortar at the optimum temperature for that particular building part.

The method preferably comprises of applying a first quantity of concrete mortar at a relatively low temperature to a relatively cold ground in order to limit the stresses occurring in the poured concrete and applying the second, subsequent quantity of concrete mortar at a relatively high temperature in order to shorten the curing time of the poured concrete.

The method preferably comprises of adjusting the temperature to the predetermined temperature value which differs by a maximum of a preset temperature difference from the temperature of the ground. The stresses occurring in the concrete can hereby be limited, which enhances the quality of the concrete construction. It has been found in practice that surprisingly good results can be achieved at a set maximum temperature difference of about 20 to 25°C in the case of cooling and 40 to 50°C in the case of heating.

According to another aspect of the invention, there is provided a device for arranging concrete in a pouring space, comprising:
- a container;
- feed means for feeding plastic mixed concrete mortar into the container;
- temperature adjusting means for adjusting the temperature of the mixed concrete mortar in the container;
- discharge means for discharging the concrete mortar to the pouring space.

According to a preferred embodiment of the invention, the temperature adjusting means comprise heating means arranged in the container for heating the concrete mortar in the container. When the temperature of the constituents from which the concrete mortar is made up results in concrete mortar of too low a temperature, the heating means ensure that the temperature of the mortar is increased to a desired level. In another preferred embodiment, the temperature adjusting means likewise comprise cooling means arranged in the container for cooling the concrete mortar in the container, so that the temperature of the concrete mortar can be reduced to a desired level once it has been mixed. In yet another preferred embodiment, the temperature adjusting means comprise combined heating/cooling means, so that the concrete mortar can be heated as well as cooled and concrete mortar at the desired temperature can therefore be supplied under practically all conditions. A further advantage is that if pouring is temporarily halted, idling is possible at an adjusted reduced temperature.

According to a further preferred embodiment, the temperature adjusting means comprise:
- a number of first liquid conduits arranged in the container;
- a heating apparatus for heating the first liquid to be carried through the conduits;
- a pump for guiding the first liquid through the conduits.

In another preferred embodiment the temperature adjusting means also or instead comprise:
- a number of second liquid conduits arranged in the container;
- a cooling apparatus for cooling the second liquid to be carried through the second conduits;
- a second pump for guiding the liquid through the conduits.

In yet another preferred embodiment, the first conduits for cooling are identical to the second conduits for heating. This means that the conduits arranged in the container can be applied for both heating and cooling by guiding a relatively hot liquid or a relatively cold liquid therethough, which greatly simplifies the construction of the device.

Although this does not apply in all cases, the liquids are preferably identical, so that both heating and cooling can be carried out with a single liquid.

In order to avoid problems with freezing of conduits or other parts of the system or to avoid special protective measures, the temperature of the liquid is held within an appropriate range. It has been found that a liquid temperature of between -100 and +150°C, and preferably of between -50 and +110°C, produces particularly good results.

According to a further preferred embodiment, the invention comprises one or more temperature sensors for determining the temperature of the concrete mortar in the container; in addition to control means for controlling the temperature adjusting means on the basis of the determined temperature of the concrete mortar, whereby the temperature of the concrete mortar can be brought to a desired preset temperature value.

According to a further preferred embodiment, the container comprises a rotatably driven drum and the temperature adjusting means comprise one or more liquid conduits arranged in or on the drum wall.

According to a further preferred embodiment, the container comprises a rotatably driven mixing drum provided with one or more mixing blades and the temperature adjusting means comprise one or more liquid conduits arranged in or on the blades.

In another preferred embodiment the liquid conduits are arranged in or on the drum wall as well as in or on the blades. For cooling or heating when making use of liquid with a temperature which only differs to a limited degree from the starting temperature of the mixed concrete mortar, for instance when liquid within the above mentioned preferred temperature range is used, the cooling and/or heating surface to which the concrete mortar is exposed must be made as large as possible. By providing the liquid conduits in both the container wall (including also the tube wall to be referred to below) and in the blades (including the mortar displacing means to be referred to below) of the container, the concrete mortar flowing therealong can be brought to a correct temperature level relatively quickly and with liquid of a temperature deviating relatively little.

According to a further preferred embodiment, the container is formed by a concrete mortar supply tube and the temperature adjusting means comprise one or more cooling conduits and/or heating conduits arranged along the tube wall.

According to a further preferred embodiment, the container comprises a receiving bin of a truck and the temperature adjusting means comprise one or more cooling and/or heating conduits arranged along the container wall.

According to another preferred embodiment, the container comprises at least one tube provided with mortar displacing means and the temperature adjusting means are provided in the mortar displacing means and/or in the tube wall. The container is preferably placed on a separate vehicle which can be placed between a truck mixer and a cable.

In a further preferred embodiment, the container comprises two or more tubes arranged in zigzag arrangement. As a result the container, and thereby the vehicle on which the container is placed, can have a relatively short length, while a sufficient cooling and/or heating capacity is still ensured. The number of tubes to be applied can herein be varied subject to the required degree of heating.

According to a further preferred embodiment, the device comprises control means which are adapted to cool a first quantity of concrete mortar in order to limit the stresses occurring in the poured concrete and to heat the second subsequent quantity of concrete mortar in order to shorten the curing time of the poured concrete.

According to a further preferred embodiment, the device comprises control means which are adapted to lower the temperature of concrete mortar for pouring on a ground in order to reduce the stresses occurring in the concrete.

According to a further preferred embodiment, the device comprises control means which are adapted to adjust the temperature of the concrete mortar for pouring to a temperature which differs by less than a set maximum temperature difference from the temperature of the ground. The maximum temperature difference preferably amounts to 25°C during cooling and to 40°C during heating, and preferably to 15°C during cooling and to 30°C during heating.

Further advantages, features and details of the present invention will be elucidated on the basis of a description of a number of preferred embodiments thereof. Reference is made in the description to the following figures.
Figure 1a shows a preferred embodiment of a mobile pumping installation with which concrete mortar can be poured in a formwork;
Figure 1b shows a preferred embodiment of a separate cooling and/or heating device in combination with a pumping installation with which the concrete mortar can be poured in a formwork;
Figure 1c shows another preferred embodiment of a separate cooling and/or heating device in combination with a pumping installation with which concrete mortar can be poured in a formwork;
Figure 2 shows a truck mixer according to an embodiment of the invention;
Figures 3 and 4 are cross-sections through the truck mixer shown in figure 2 or the heating and/or cooling unit shown in figure 1b;
Figure 5 shows the temperature distribution of a wall poured onto a floor, wherein a system of cooling pipes is applied;
Figure 6a shows a graph of the temperature variation through time at position x1 when no cooling system is applied;
Figure 6b shows a graph of the temperature variation through time at positions x1 and x2 in the wall of figure 5;
Figure 7 shows the stress distribution in the wall of figure 5;
Figure 8 shows a graph of the stress variation through time at positions x1 and x2 of figure 5;
Figure 9 shows the temperature distribution in a wall poured onto a floor, wherein the wall is arranged in accordance with the method according to the invention;
Figure 10 shows a graph of the temperature variation through time at position x1 in the wall of figure 9;
Figure 11 shows the stress distribution in the wall of figure 9;
Figure 12 shows a graph of the stress variation through time for position x1 of the wall of figure 9; and
Figure 13 shows in schematic manner a cross-section through a tunnel element.
Figure 14 shows a more detailed cross-section through the tunnel element of figure 13;
Figure 15 shows the temperature distribution as a function of location in a tunnel constructed with uncooled concrete mortar;
Figure 16 shows a graph of the temperature variation as a function of time;
Figure 17 shows the stress distribution as a function of location;
Figure 18 shows a graph of the stress as a function of time at positions x1 and x3;
Figure 19 shows the temperature distribution as a function of location of a tunnel wherein a system of cooling pipes is applied to cool the wall;
Figure 20 is a graph of the temperature variation as a function of time at positions x1-x3;
Figure 21 shows the stress distribution as a function of location of the tunnel cross-section of figure 19;
Figure 22 shows a graph of the stress variation as function of time for the tunnel cross-section of figure 19;
Figure 23 shows the temperature distribution as a function of location in a tunnel wherein the concrete mortar according to an aspect of the invention is arranged;
Figure 24 shows the temperature variation as a function of time at positions x1-x3 of the tunnel part of figure 25;
Figure 25 (T = 247 hours) shows the stress distribution as a function of location for the tunnel of figure 23; and
Figure 26 shows the stress variation as a function of time at positions x1-x3 for the tunnel of figure 23.

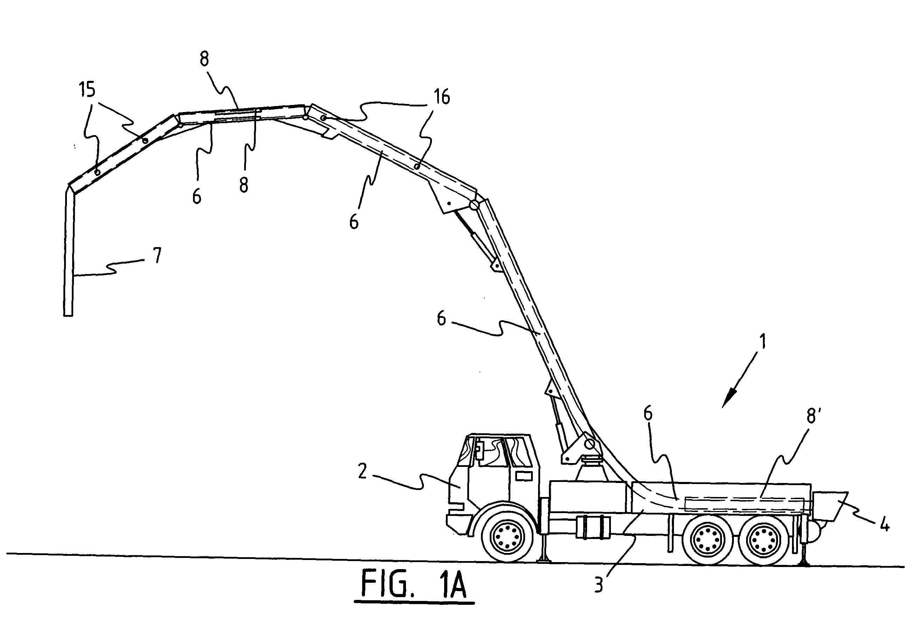

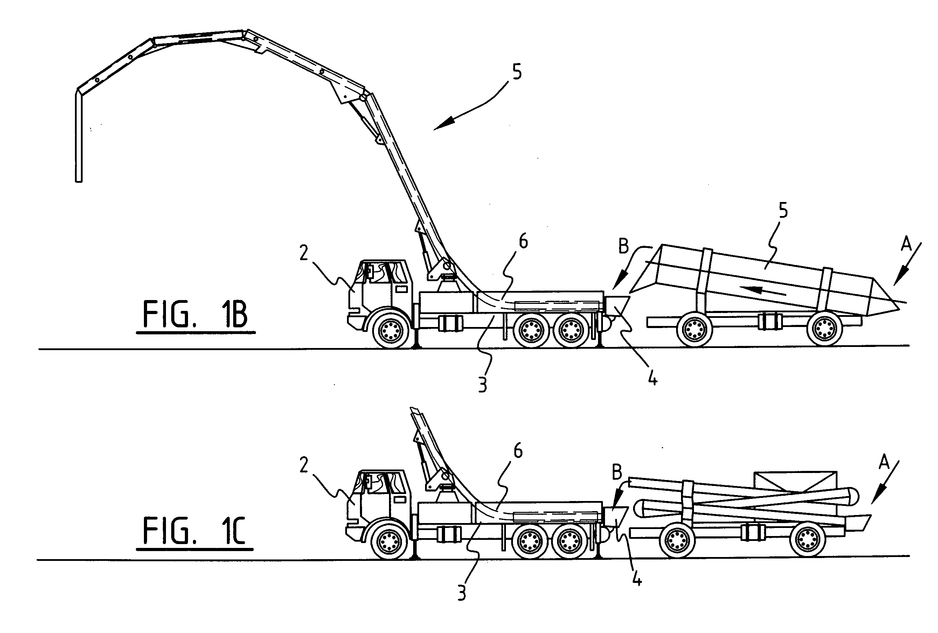

Figure 1a shows a view of a first preferred embodiment of a device according to the invention. Figure 1a shows a mobile pumping installation 1 with which plastic concrete mortar can be cooled and heated. It is noted that the term "plastic" is usual in the field to denote all concrete mortar that has not yet cured. The term "plastic concrete mortar" should therefore not only be understood to mean concrete mortar which is in a kneadable or deformable state, but also includes concrete mortar in a liquid and/or viscous state.

The shown pumping installation 1 comprises a truck 2, in a load platform 3 of which concrete mortar can be arranged via a receiving bin 4. A concrete pump (not shown) guides the plastic concrete mortar through a concrete mortar supply tube. In the shown embodiment the concrete mortar supply tube takes an articulated form, i.e. the tube is constructed from a number of successively arranged tube segments 6 pivotable relative to each other, whereby it is easy to position the discharge opening of the tube at the desired position above a formwork. In the shown embodiment the end of the tube is manufactured from flexible (rubber) material to allow optional manual displacement of the discharge opening by a construction worker.

Placed at one or more positions in the tube along the tube wall thereof are elements 8 with which the concrete mortar flowing therealong can be cooled and/or heated. The elements can be combined cooling/heating elements with which cooling or heating can be performed as required. The elements can however also be separate cooling elements and separate heating elements. The elements comprise conduits through which liquid of a suitable temperature passes. By heat transfer via the liquid and the conduit wall to the concrete mortar in the concrete mortar supply tube or by extraction of heat from the concrete mortar via the conduit wall to the liquid in said conduits, the temperature of the concrete mortar can be brought to and held at a desired value.

In the shown embodiment the cooling/heating elements 8 are arranged in a single tube segment 6. It is however also possible to arrange such cooling/heating elements in two or more tube segments 6. It is also possible to provide cooling/heating elements 8' (shown in broken lines) in the load platform 3 of truck 2 or in one of the other tube segments 6.

Preferably however, cooling/heating elements 8 are provided in the vicinity of the exit opening of tube 6 to ensure the most accurate possible adjustment of the temperature of the concrete mortar. In the other case the concrete mortar could still heat up or cool down during transport through the remaining part of the tube.

Figure 1a further shows in schematic manner that the concrete mortar supply tube can be provided with a number of temperature sensors 15, 16. Temperature sensors 15 are preferably arranged downstream of cooling/heating elements 8. On the basis of the temperature sensors 15 the temperature of the concrete mortar flowing past can be determined. Control means (not shown) can control cooling/heating elements 8 subject to the thus determined temperature. When the mixture flowing past temperature sensors 15 is for instance too cool, the activity of cooling elements 8 can be reduced and/or the activity of heating elements 8 can be increased. If, conversely, the temperature of the mixture flowing past temperature sensors 15 is too high, the activity of cooling elements 8 and heating elements 8 can be increased respectively reduced. Such control takes place such that the temperature can be adjusted and held (within predetermined limits) at a desired value. Even if the ambient conditions change for instance when the outside temperature is subject to great fluctuations, the concrete mortar can be held at an almost constant value.

Temperature sensors 16 are on the other hand provided downstream relative to the cooling/heating elements 8. These temperature sensors 16 are also connected to control means (not shown), with which the activity of the cooling/heating elements 8 can be controlled.

Figure 1b shows another embodiment, in which the cooling or heating of concrete mortar takes place in a cooling and/or heating unit 5 which is provided with a container and which can be placed between a truck mixer (not shown) (inlet point A, truck mixer without cooling/heating module) and a concrete pump or cable 17 and the like (outlet point B, pump without cooling/heating module). The heating unit comprises a frame 20 on which a container 21 is disposed at an angle. The container is provided with blades with which the mortar can be displaced. Cooling or heating of the concrete mortar takes place by providing the blades in the container and/or the wall of the container with cooling/heating conduits which are connected to a cooling/heating module.

Figure 1c shows a further preferred embodiment of the invention, wherein cooling and/or heating of concrete mortar takes place in the separate mobile cooling and/or heating unit 5 which can be placed between a truck mixer (not shown) (inlet point A, truck mixer without cooling/heating module) and a concrete pump or cable 17 and the like (outlet point B, pump without cooling/heating module). The cooling or heating of the concrete mortar takes place by transporting the concrete (mortar) through a number of (in the shown embodiment three) tubes 22 provided on mobile frame 20 of unit 5 (these being referred to as jacks in the field). Tubes 22 are provided with worm wheels for transport purposes and are provided with cooling and/or heating conduits for cooling and/or heating purposes. The conduits can be arranged on the inside and/or outside of the tube wall, on the outside of the worm wheels and/or even inside the worm wheels. The conduits are connected to a cooling/heating module 23.

The tubes have a predetermined length (about 6 m) and have a more or less fixed cooling and/or heating capacity. The number of tubes 22 applied depends on the required degree of cooling or heating. If the concrete mortar only has to be heated or cooled a little, a small number (for instance 2 tubes) will suffice, while at a greater required cooling capacity the number of tubes is larger (for instance 3 or more). The frame is embodied herein such that the number of tubes 22 applied and the angle at which they extend can vary.

Another embodiment (not shown) relates to a combination of the embodiment described above with reference to figure 1c (cooling and/or heating with jacks) which is integrated into the installation of a stationary or mobile concrete mixing plant.

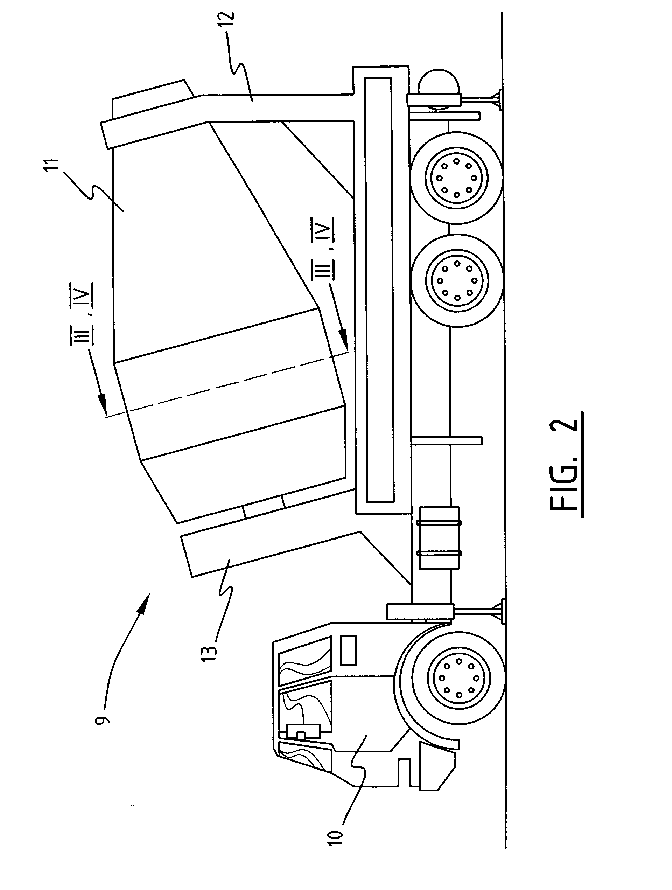

Shown in figure 2 is another preferred embodiment of the device according to the invention. The figure shows a truck mixer 9 consisting of a truck 10 provided with a rotatable drum 11. Drum 11 is mounted rotatably in a frame 12, 13 mounted on truck 10. The rotating movement of drum 11 is driven in known manner by an electric motor (not shown).

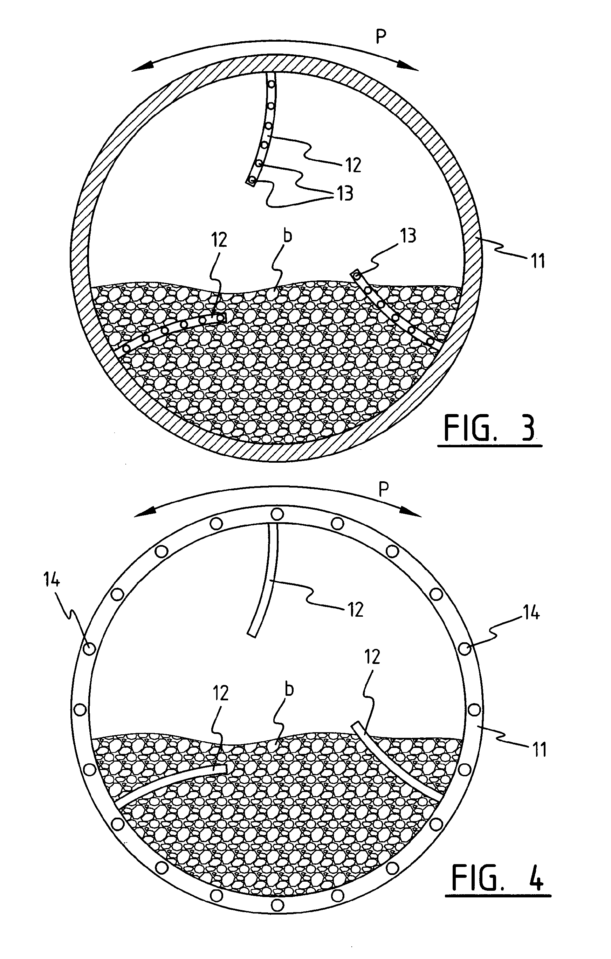

Figure 3 shows a cross-section at location III-III through drum 11 of truck mixer 9. The cross-section shows a drum 11 which is provided on the inside with three curved blades 12. Arranged in blades 12 are elements 13 with which concrete mortar b possibly present in drum 11 can be heated respectively cooled.

Figure 4 shows an alternative embodiment in which cooling/heating elements 14 are provided in wall 11 of the drum instead of in blades 12. Other embodiments in which cooling/heating elements 13 and 14 are arranged in both wall 11 and blades 12 are however also possible.

With cooling/heating elements 13, 14 the temperature of the concrete mortar b in drum 11 can be adjusted in quite accurate manner. The drum undergoes a rotational movement (arrow P1) which has the purpose of mixing the different constituents of concrete mortar b in known manner. It will however also be possible to mix the concrete mortar b with the rotational movement such that a relatively uniform temperature of concrete mortar b can be achieved.

So as to determine the influence the temperature of concrete mortar (during pouring) has on the quality of building construction, a number of simulations have been carried out of the stresses occurring in the concrete. The simulation also comprises of visualizing the difference in the build-up of stress between the different above mentioned method embodiments. The simulations were carried out for two situations.

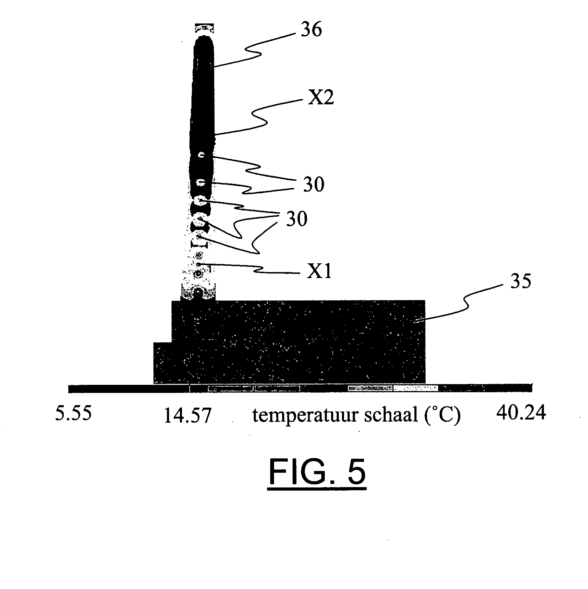

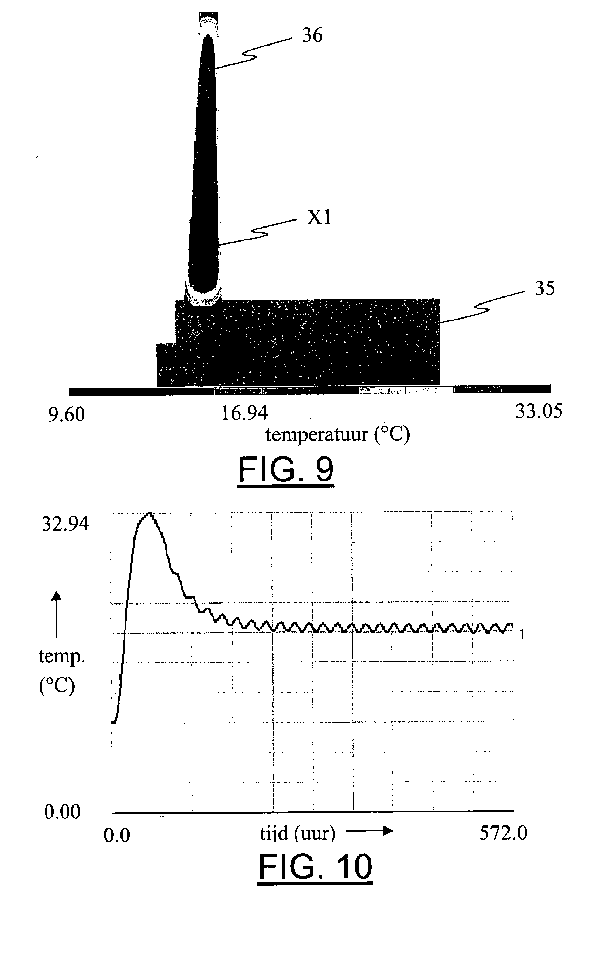

In the first situations (figures 5-8) a wall 36 is arranged on a relatively cold ground of an already poured concrete floor 35 by pouring concrete mortar into a formwork suitable for this purpose. In the pouring space defined by the formwork there is provided a system of eight cooling pipes 30 which, once the mortar has been poured, can cool the concrete wall from the inside. A second situation (figures 9-12) relates to the same configuration, although here the concrete mortar for pouring is cooled according to the ) invention. In the table shown below the values of a number of parameters used in the simulation are listed.

**Table 1.**

| Physical data of the first and second simulation | | | |
|---|---|---|---|
| Ambient temperature | outside | °C | 20±5 |
| Mortar temperature | uncooled | °C | 25 |
| Mortar temperature | cooled | °C | 10 |
| Temperature floor | | °C | 20 |
| Ground temperature | | °C | 20 |
| Wind speed (average) | outside | m/s | 3 |
| width of wall | | m | 0.95-0.5 |
| height of wall | | m | 7.4 |

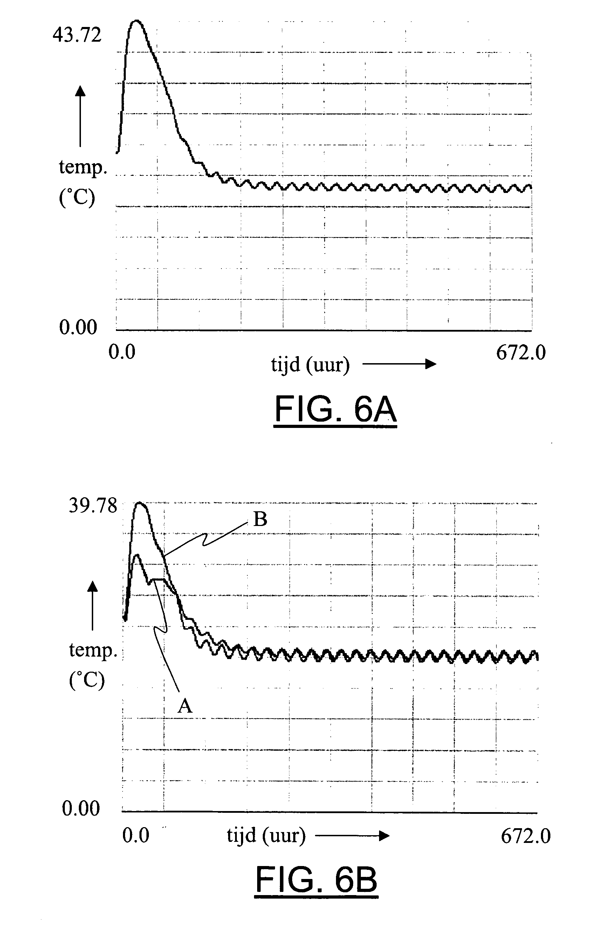

Shown in figure 5 is the temperature distribution of the wall 26.5 hours after pouring. It can be clearly seen that the temperature is reasonably low at a number of positions in the wall. These positions correspond to the positions of the cooling pipes 30 provided in the wall. Outside of these, however, the temperature is quite high. Figure 6a shows the temperature at the position x1 in the situation where no cooling pipes are applied, while figure 6b shows the temperature at the position x1 and the position x2 when said system of cooling pipes is applied. In figure 6b curve A shows the temperature at the position x1 as a function of time, while curve B shows the temperature at position x2. It can be seen that under the influence of cooling pipes 30 the temperature is considerably reduced during the first two days. After this time the wall will rather follow the temperature fluctuations of the outside air (day/night cycle).

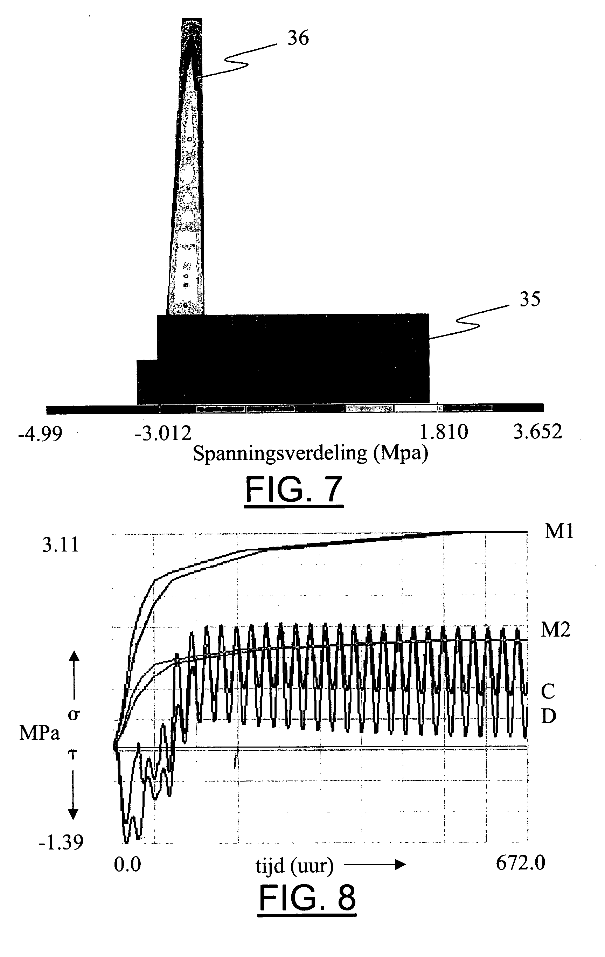

Figure 7 shows the stress distribution in the wall as a function of location (at point in time t = 250 hours), while figure 8 shows the stress variation for the positions x1 and x2 as a function of time. In figure 8 curves C and D show the stress variation at respectively position x1 and position x2. τ here designates tensile stresses, while σ designates compression stresses. Curve M1 shows the developed tensile stress in the concrete, while curve M2 shows the maximum permissible stress which may occur in the concrete (with a 50% safety margin). In practice the average stresses occurring in the wall should remain below the curve M2.

Figure 8 clearly shows that the stresses occurring in the wall occasionally rise above curve M2. On average however, the stresses remain below curve M2.

Figure 9 shows the temperature distribution (at point in time t = 65.5 hours) of a wall wherein the temperature has been decreased during pouring (see table 1). Shown in figure 10 is the temperature variation at position x1 as a function of time. It can be seen that at the point in time t = 0 the temperature of the concrete mortar is much lower than in the previous case (figure 6).

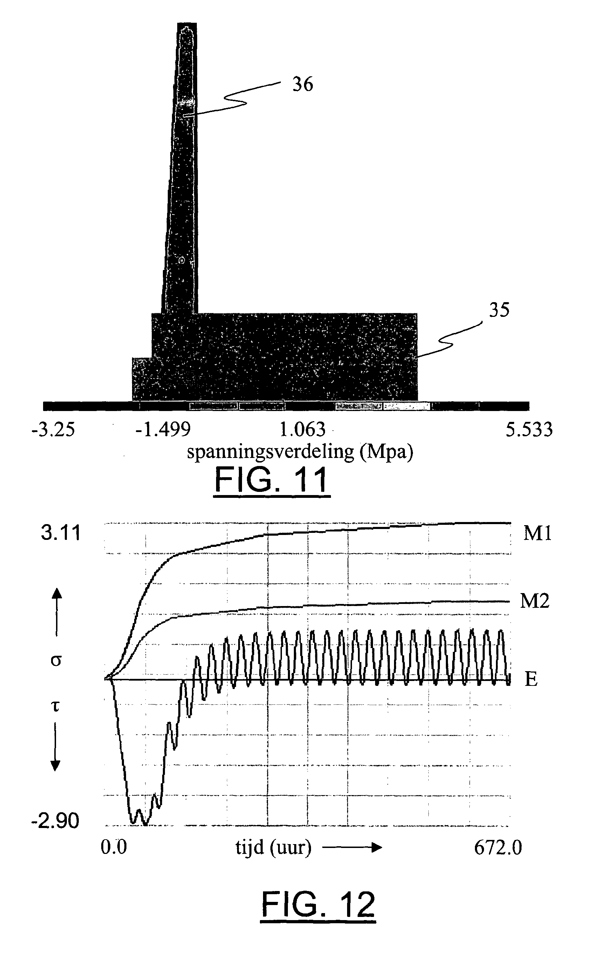

Figure 11 shows the stress distribution in the wall( at point in time t = 513 hours), while figure 12 shows the stress variation as a function of time. Shown clearly is that the stress at position x1 (curve E shows the stress at position x1) always remains well below the maximum permissible stress (curve M2). This means that the risk of cracking has been further reduced.

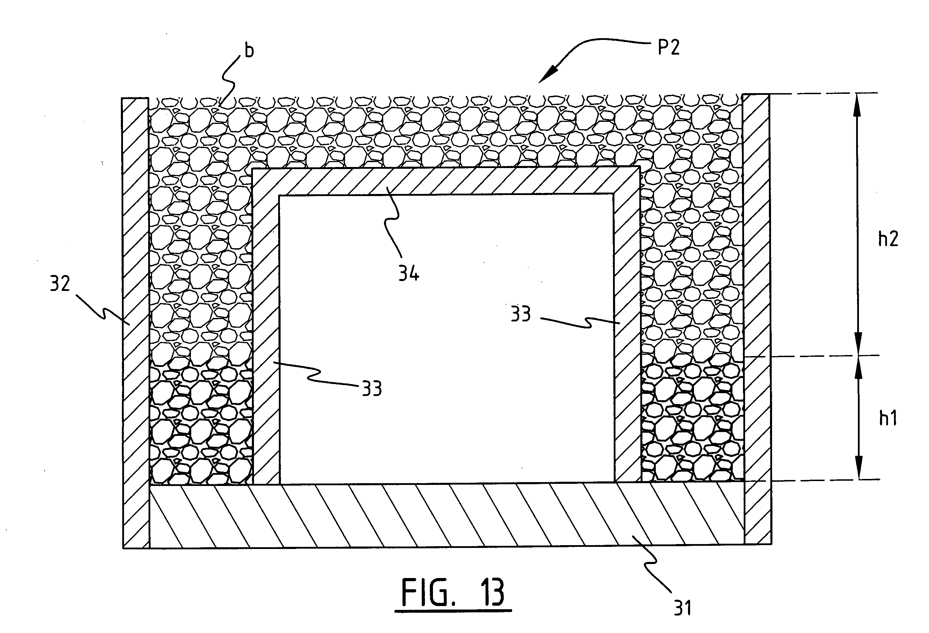

Figure 13 shows an example of an application of the device according to the invention. Shown is a cross-section through a tunnel casing. Wall formwork elements 32 and 33 are arranged on a relatively cold floor 31, while a roof formwork 34 is provided on top of wall formwork 33. The concrete mortar is poured form above (arrow P2) into the space formed ) by the formwork elements 32, 33 and 34. So as to avoid excessive stress differences between the relatively cold ground 31 and the relatively warm concrete mortar b, the concrete mortar which comes to lie directly on floor 31 is cooled during pouring to a temperature which does not differ too much from that of floor 31. This means a reduction in the stresses occurring in the walls.

Once the relatively cold concrete mortar has been arranged over a height h₁, relatively warm concrete mortar is poured on top of this over a height h₂. This concrete mortar is heated during pouring. Owing to the relatively high temperature of this part of the concrete mortar, it will be possible to considerably reduce the curing time of this concrete. Because the concrete of the roof of the tunnel, i.e. the upper part of the concrete mortar shown in figure 13, cures much more rapidly, formwork 34 can be removed after a shorter time. This means that the speed at which a tunnel can be constructed is considerably increased.

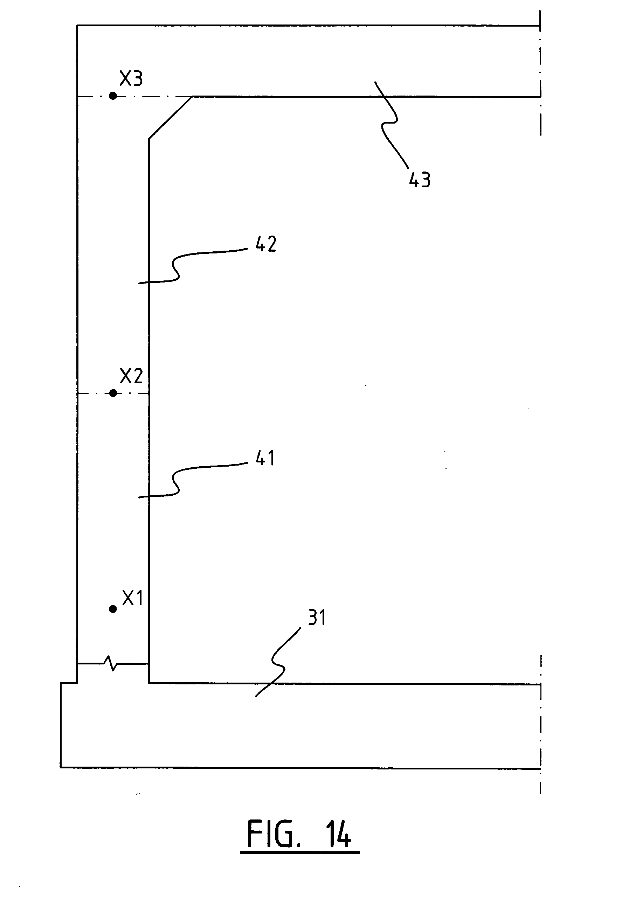

Figure 14 shows the tunnel cross-section of figure 13 in more detail. A simulation has also been carried out for this configuration. The standing wall of the tunnel is divided into two sections 41 and 42, while the roof is defined as section 43.

In table 2 below the values of a number of parameters used in the simulation are listed.

**Table 2.**

| Parameter values | | | |
|---|---|---|---|
| Ambient temperature | outside | °C | 20±5 |
| Mortar temperature | section 41 | °C | 15 |
| Mortar temperature | section 42 | °C | 20 |
| Mortar temperature | section 43 | °C | 25 |
| Temperature floor | | °C | 20 |
| Ground temperature | | °C | 20 |
| Wind speed (average) | outside | m/s | 3 |
| floor thickness | | m | 10 |
| wall thickness | | m | 9 |
| roof thickness | | m | 10 |

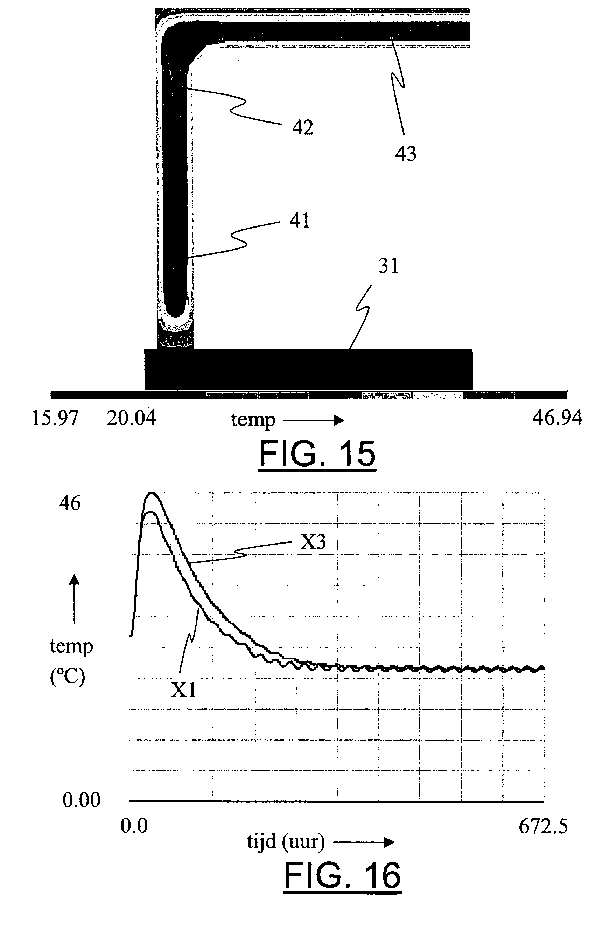

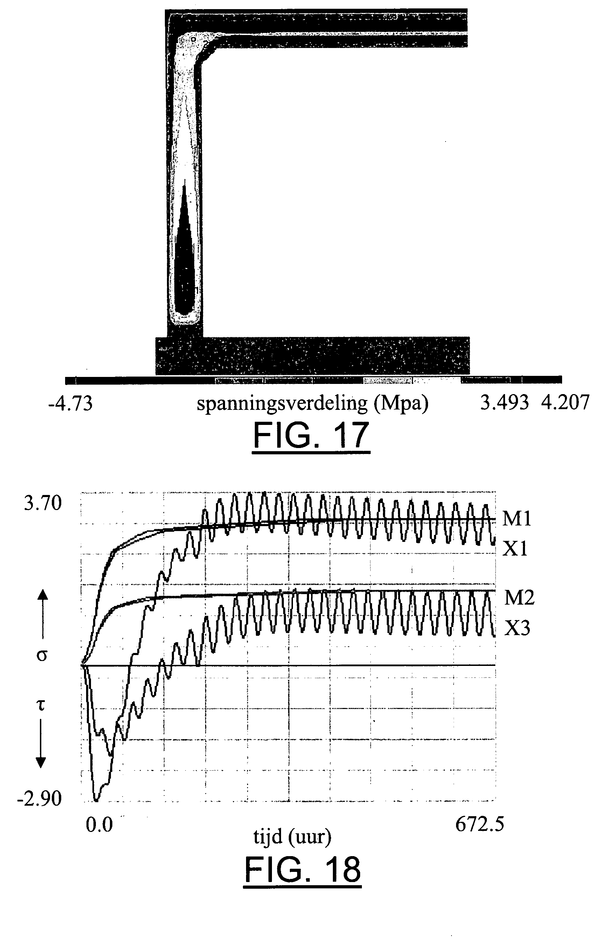

Fig. 15 shows the temperature distribution (time = 36 hours) in the tunnel wall and the tunnel roof, while figure 16 shows the temperature variation in time at positions x1 and x3, when the tunnel wall and the tunnel roof are manufactured from uncooled concrete mortar. The position x1 corresponds to the above mentioned position x1 in the wall, while position x3 is situated roughly at the location of the connection of tunnel roof 43 to tunnel wall 41, 42. The stress distribution occurring as a result of the shown temperature distribution as a function of location (at point in time t = 220 hours) and the stress variation at positions x1 and x3 as a function of time are shown respectively in figures 17 and 18.

Figure 18 shows that the stress variation as a function of time at positions x1 and x3 reaches values which exceed the maximum permissible curve M2. On average the values of the stress at position x3 fall below the curve M2, but the values at position x1 far exceed the maximum permissible values according to curve M2. This is an unacceptable situation.

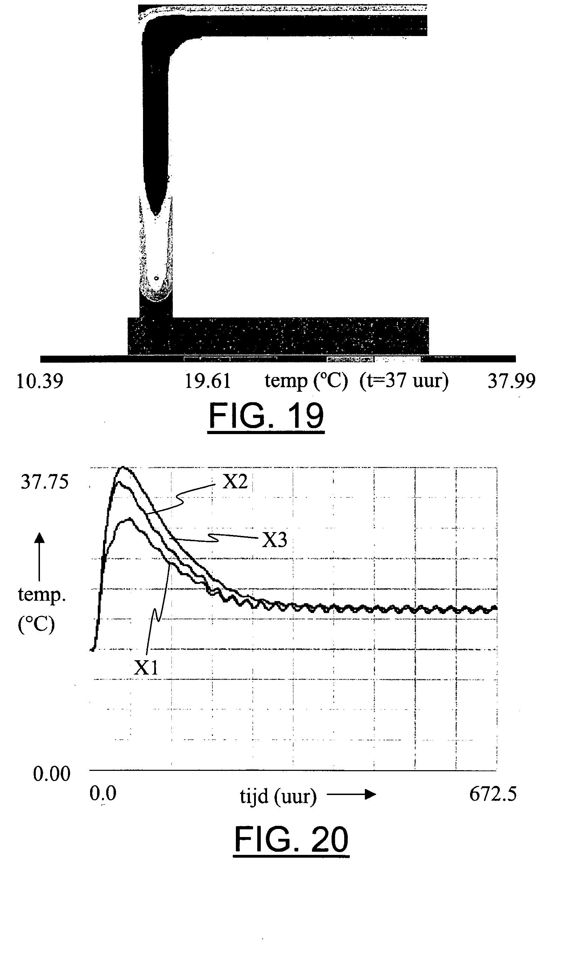

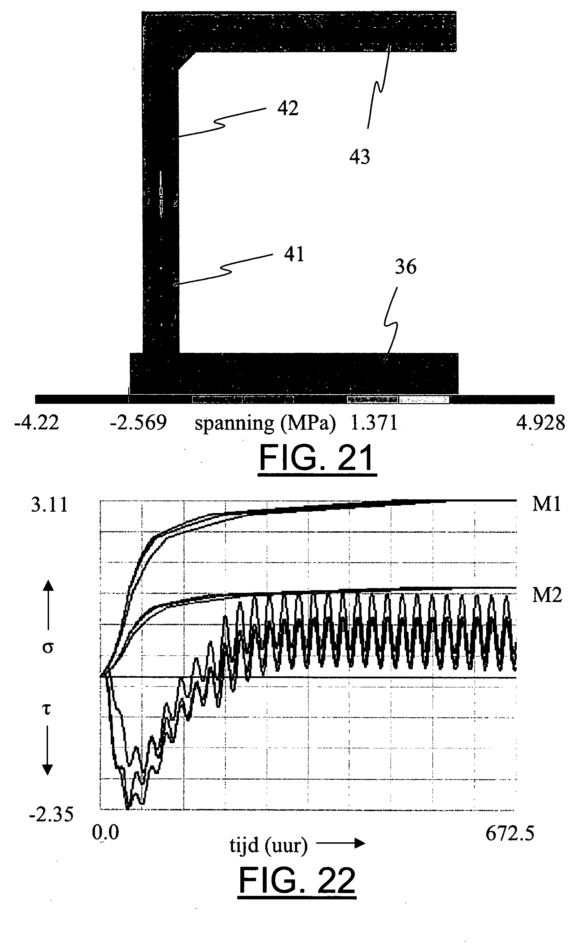

Figures 19-22 show the situation in which a system of cooling pipes is applied. In this situation the temperature and stress are determined at three positions. Positions x1 and x3 correspond with positions x1 and x3 of figure 14. Position x2 is situated about halfway between positions x1 and x3, at the location of the transition from the upper section 42 to the lower section 41. Clearly shown is that the average stress variation in time at positions x1, x2 and x3 remains below the maximum permissible curve M2.

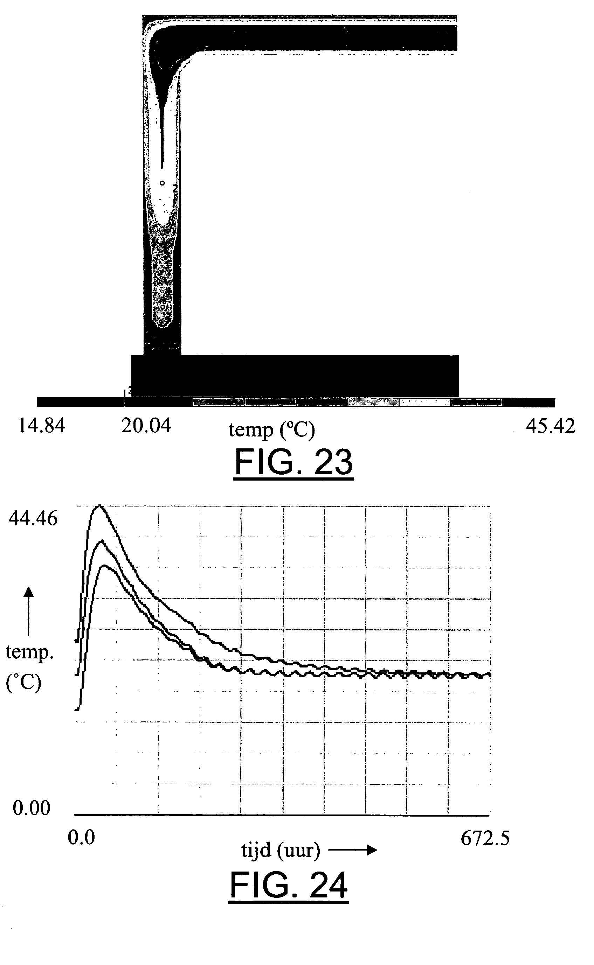

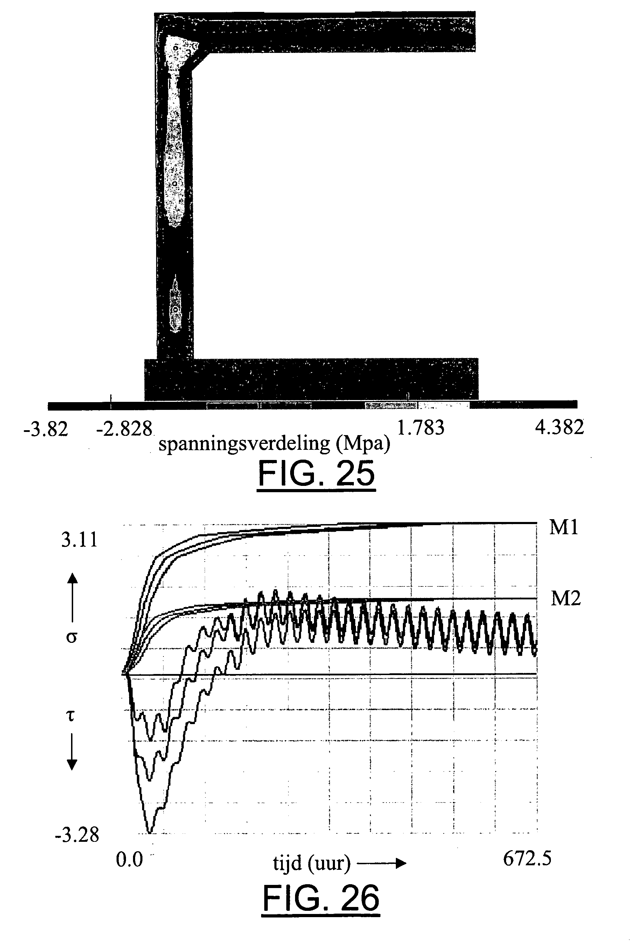

Figures 23-26 show respectively the temperature distribution as a function of location at point in time t = 37 hours, the temperature variation at points x1-x3 as a function of time, the stress distribution as a function of location and the stress variation as a function of time for positions x1-x3. These figures, and particularly figure 26, show that the average values of the stresses occurring in time fall on average below the values of the maximum permissible curve M2. This means that in the case cooled concrete mortar is used to arrange the lower section 41, the stresses always remain below the maximum permissible stress values. Comparison of figure 24 with figure 20 furthermore shows that at the location of position x3, i.e. between the tunnel wall and the tunnel roof, the temperatures are higher since the concrete mortar of a higher temperature is applied to manufacture this part of the construction. This has the consequence that the upper parts of the construction, i.e. the upper section 42 and tunnel roof 43, will cure much more rapidly than in the case where cooling pipes are applied.

In the foregoing description of a number of preferred embodiments the ground is formed by a concrete floor. The ground can however also be another random structural element. In the case a concrete roof is arranged on an upright wall, the ground is for instance formed by the upright wall.

The present invention is moreover not limited to the described preferred embodiments thereof. The rights sought are defined by the following claims, within the scope of which many modifications can be envisaged.

## Claims

1. Method for pouring concrete onto a ground in a pouring space intended for this purpose, comprising of:
- providing plastic mixed concrete mortar;
- supplying heat to the mixed concrete mortar or extracting heat from the concrete mortar so as to adjust the temperature of the provided concrete mortar to a desired predetermined temperature value;
- pouring the concrete mortar brought to said temperature value into the pouring space intended for the purpose.

2. Method as claimed in claim 1, comprising of guiding the provided concrete mortar in a container and heating or cooling the container, subject to the adjusted temperature value, with temperature adjusting means disposed in or close to the container for the purpose of heating respectively cooling the concrete mortar in the container.

3. Method as claimed in claim 2, wherein the temperature adjusting means comprise a number of conduits arranged in the container and the method comprises the further steps of guiding relatively warm or cold liquid through the conduits in order to bring the concrete mortar to the correct temperature.

4. Method as claimed in claim 3, wherein the temperature of the liquid amounts to between -100 and +150°C, and preferably to between -50 and +110°C.

5. Method as claimed in any of the foregoing claims, comprising of determining the temperature of the concrete mortar and heating or cooling the concrete mortar on the basis of the determined temperature.

6. Method as claimed in claim 5, comprising of repeating the steps of determining the temperature and heating and/or cooling the concrete mortar until the concrete mortar has reached the desired, predetermined temperature value.

7. Method as claimed in any of the foregoing claims, comprising of:
- supplying plastic concrete mortar;
- carrying the supplied concrete mortar through a concrete mortar container, in particular a concrete mortar supply tube;
- heating respectively cooling the concrete mortar in the container with the temperature adjusting means;
- discharging the thus treated concrete mortar from the container.

8. Method as claimed in any of the claims 1-6, comprising of:
- mixing concrete mortar in a mixing device provided with a container;
- heating respectively cooling at least a part of the mixing device with the temperature adjusting means until the concrete mortar has reached the desired, preset temperature;
- discharging the thus treated concrete mortar from the mixing device.

9. Method as claimed in any of the claims 1-6, comprising of:
- mixing concrete mortar in a mixing device;
- guiding the concrete mortar out of the mixing device to a container;
- heating respectively cooling at least a part of the container with the temperature adjusting means until the concrete mortar has reached the desired, preset temperature;
- discharging the thus treated concrete mortar from the container.

10. Method as claimed in claim 8 or 9, wherein the mixing device comprises a mixing vessel arranged on a mobile frame.

11. Method as claimed in claim 10, wherein the mixing device comprises a rotatable mixing vessel mounted on a truck.

12. Method as claimed in any of the foregoing claims, comprising of changing the temperature of the concrete mortar during pouring of the concrete mortar into the space intended for the purpose.

13. Method as claimed in claim 12, comprising of bringing a first quantity of concrete mortar to a relatively low temperature in order to limit the stresses occurring in the poured concrete, and bringing the second, subsequent quantity of concrete mortar to a relatively high temperature in order to shorten the curing time of the poured concrete.

14. Method as claimed in any of the foregoing claims, comprising of adjusting the temperature to the predetermined temperature value which differs by a maximum of a preset temperature difference from the temperature of the ground.

15. Method as claimed in claim 14, wherein the set maximum temperature difference amounts to 25°C, and preferably 15°C, in the case of cooling.

16. Method as claimed in claim 15, wherein the set maximum temperature difference amounts to 50°C, and preferably 30°C, in the case of heating.

17. Device for arranging concrete in a pouring space, comprising:
- a container;
- feed means for feeding plastic mixed concrete mortar into the container;
- temperature adjusting means for adjusting the temperature of the mixed concrete mortar in the container;
- discharge means for discharging the concrete mortar to the pouring space.

18. Device as claimed in claim 17, wherein the temperature adjusting means comprise heating means arranged in the container for heating the concrete mortar in the container.

19. Device as claimed in claim 17 or 18, wherein the temperature adjusting means comprise cooling means arranged in the container for cooling the concrete mortar in the container.

20. Device as claimed in claims 18 and 19, wherein the temperature adjusting means comprise combined heating/cooling means.

21. Device as claimed in any of the claims 17-20, wherein the temperature adjusting means comprise:
- a number of first liquid conduits arranged in the container;
- a heating apparatus for heating the first liquid to be carried through the conduits;
- a pump for guiding the first liquid through the conduits.

22. Device as claimed in any of the claims 17-21, comprising:
- a number of second liquid conduits arranged in the container;
- a cooling apparatus for cooling the second liquid to be carried through the second conduits;
- a second pump for guiding the liquid through the conduits.

23. Device as claimed in claims 21 and 22, wherein the first conduits for cooling are identical to the second conduits for heating.

24. Device as claimed in any of the claims 21-23, wherein the first and second liquids are identical.

25. Device as claimed in any of the claims 21-24, wherein the temperature of the liquid amounts to between -100 and +150°C, and preferably to between -50 and +110°C.

26. Device as claimed in one or more of the claims 17-25, comprising one or more temperature sensors for determining the temperature of the concrete mortar in the container; in addition to control means for controlling the temperature adjusting means on the basis of the determined temperature of the concrete mortar, whereby the temperature of the concrete mortar can be brought to a desired preset temperature value.

27. Device as claimed in any of the claims 17-26, wherein the container is mobile.

28. Device as claimed in any of the claims 17-27, wherein the container is mounted on a vehicle.

29. Device as claimed in any of the claims 17-28, wherein the container comprises a rotatably driven drum and the temperature adjusting means comprise one or more heating and/or cooling elements arranged in or on the drum wall.

30. Device as claimed in any of the claims 17-29, wherein the container comprises a rotatably driven mixing drum provided with one or more mixing blades and the temperature adjusting means comprise one or more heating and/or cooling elements arranged in or on the blades.

31. Device as claimed in any of the claims 17-30, wherein the container is formed by a concrete mortar supply tube and the temperature adjusting means comprise one or more liquid conduits arranged along the tube wall.

32. Device as claimed in claim 31, comprising a pump for pumping the concrete mortar through the concrete mortar supply tube.

33. Device as claimed in any of the claims 17-32, wherein the container comprises a receiving bin of a truck and the temperature adjusting means comprise one or more liquid conduits provided along the container wall.

34. Device as claimed in any of the claims 17-33, wherein the control means are adapted to cool a first quantity of concrete mortar in order to limit the stresses occurring in the poured concrete and to heat the second subsequent quantity of concrete mortar in order to shorten the curing time of the poured concrete.

35. Device as claimed in any of the claims 17-34, wherein the container comprises at least one tube provided with mortar displacing means and the temperature adjusting means are provided in the mortar displacing means and/or in the tube wall.

36. Device as claimed in claim 35, wherein the container comprises one or more jacks arranged in zigzag arrangement.

37. Device as claimed in any of the foregoing claims, wherein the container is integrated into a concrete mixing installation.

38. Device as claimed in any of the claims 17-37, wherein the control means are adapted to adjust the temperature of the concrete mortar for pouring to a temperature which differs by less than a set maximum temperature difference from the temperature of the ground.

39. Device as claimed in claim 38, wherein the maximum temperature difference during cooling amounts to 20°C, and preferably 15°C.

40. Device as claimed in claim 38, wherein the maximum temperature difference during heating amounts to 50°C, and preferably 30°C.

41. Method as claimed in any of the claims 1-16, wherein the device according to any of the claims 17-40 is applied.
